# EUROPÄISCHE PATENTSCHRIFT

(11) **EP 3 358 233 B1**
(45) Veröffentlichungstag und Bekanntmachung des Hinweises auf die Patenterteilung: **30.09.2020**
(21) Anmeldenummer: 18154291.1
(22) Anmeldetag: 30.01.2018
(51) Int. Cl.: F16K 31/06, F16K 27/04

(54) **VENTIL, INSBESONDERE SCHIEBERVENTIL**
VALVE, IN PARTICULAR SPOOL VALVE
SOUPAPE, EN PARTICULIER SOUPAPE À TIROIR

(30) Priorität: 03.02.2017 DE 102017102205
(43) Veröffentlichungstag der Anmeldung: 08.08.2018
(73) Patentinhaber: SVM Schultz Verwaltungs-GmbH & Co. KG, 87700 Memmingen (DE)
(72) Erfinder: Mang, Helmut, 87700 Memmingen (DE); Schreiber, Florian, 89264 Weißenhorn (DE)
(74) Vertreter: Patentanwälte Olbricht, Buchold, Keulertz Partnerschaft mbB

(56) Entgegenhaltungen:
- WO-A1-2015/036076
- DE-A1- 19 535 945
- DE-A1- 19 729 935
- DE-A1-102004 017 088
- DE-A1-102014 004 796
- US-A1- 2016 103 455
- US-B1- 6 918 409

## Beschreibung

Die Erfindung betrifft ein Ventil, insbesondere Schieberventil, welches ein Gehäuse und ein Ventilgehäuse aufweist, wobei das Gehäuse einen Elektromagneten aufnimmt und das Ventilgehäuse ein Ventilteil aufnimmt und das Gehäuse, dem Ventilgehäuse zugewandt, einen Magnetkern aufweist und der Magnetkern im Elektromagneten einen Ankerraumboden ausbildet, der den Ankerraum begrenzt und an dem der im Ankerraum beweglich gelagerte Anker in einer ersten Stellung des Elektromagneten anliegt und der Magnetkern im Bereich des Ankerraumbodens eine Durchdringungsbohrung aufweist, welche eine mit dem Anker in Wirkverbindung stehende Ankerstange aufnimmt und das Ventilgehäuse eine Schieberhülse aufnimmt, welche sich entlang einer Längsachse erstreckt.

Eingangs beschriebene Ventile, insbesondere Schieberventile, werden im Stand der Technik dazu verwendet, den Fluiddruck, also den Druck von gasförmigen oder flüssigen Medien zu regeln. Dabei sind solche Ventile als Druckregelventil ausgebildet, das bedeutet einer eingangsseitig eingestellten Regelgröße, zum Beispiel dem elektrischen Strom, entspricht eine entsprechende Druckhöhe des Fluids am Arbeitsanschluss.

Vorbeschriebene Ventile kennen, aufgrund ihrer Ausgestaltung als Druckregelventil, eine Vielzahl von Stellungen, die einhergehen mit einer Vielzahl von Stellungen des Elektromagneten, insbesondere der Lage des Ankers des Elektromagneten. Die Spule des Elektromagneten wird mit elektrischem Strom beaufschlagt, aufgrund dessen sich ein Magnetfeld ausbildet, das den Anker gegen die Kraft einer Rückstellfeder bewegt. Die Stellungen des Elektromagneten korrespondieren insofern mit unterschiedlichen Stellungen oder Lagen der verschiedenen Elemente des Elektromagneten bzw. des Ventils, zum Beispiel dem Steuerkolben.

Typischer Einsatzbereich solcher Ventile ist die Steuerung von Automatikgetrieben im Kfz-Bereich. Neuerdings wird hier, insbesondere aufgrund Erwägungen Energie zu sparen, das Druckpotenzial am eingangsseitigen Druckanschluss des Ventils sehr viel flexibler gestaltet, wobei von den eingesetzten Ventilen erwartet wird, auch mit solchem eingangsseitigen vorgegebenem größerem Druckintervall ein zufriedenstellendes Regelverhalten zur Verfügung zu stellen.

DE102004017088 offenbart ein Ventil gemäß dem Oberbegriff des Anspruchs 1.

Die Erfindung hat sich zur Aufgabe gemacht ein Ventil zur Verfügung zu stellen, das die vorgenannten Bedingungen erfüllt.

Zur Lösung dieser Aufgabe geht die Erfindung aus von einem Ventil wie eingangs beschrieben und schlägt vor, dass das Gehäuse zumindest eine Anlagefläche aufweist, an welcher die Schieberhülse anliegt, und die Durchdringungsbohrung in die Anlagefläche mündet und in der Schieberhülse ein gegen die Kraft einer Rückstellfeder beweglicher Steuerkolben angeordnet ist, der mit der Ankerstange in Wirkverbindung steht und in einer zweiten Stellung des Elektromagneten an der Anlagefläche anliegt. Erfindungsgemäß ist in der Schieberhülse außenseitig eine umfangsmäßig umlaufende Nut ausgebildet. Komplementär dazu ist an dem Ventilgehäuse ein Wulst ausgebildet, welcher in die Nut eingreift. Damit sind die Schieberhülse und das Ventilgehäuse formschlüssig miteinander verbunden.

Der Pfiff der Erfindung liegt darin, dass gefunden wurde, dass das Regelverhalten erfindungsgemäßer Ventile, insbesondere in den geforderten Druckintervallen, erheblich verbessert wird, wenn in dem Ventil möglichst wenig elastische Bauteile, wie zum Beispiel Federn usw., verwendet werden. Die Konstruktion ist so gewählt, dass geringste Toleranzketten bestehen, die im Stand der Technik durch zusätzliche Federn kompensiert wurden. Daher schlägt die Erfindung vor, dass sich die für die genaue Regelkennlinie benötigten Elemente am Magnetkern abstützen, dessen hierzu vorgesehenen Flächen (Anlagefläche und Ankerraumboden) in einem Aufspannprozess hochgenau zueinander bearbeitet werden können. Dies kann auch als eigenständiger erfindungswesentlicher Aspekt betrachtet werden.

Hieraus resultiert ein wesentlicher Vorzug einer Variante des Vorschlages, bei welchem keine Einstellvorrichtung für die Lage des Ankers relativ zum Ankerraumboden in der zweiten Stellung des Elektromagneten vorgesehen ist. Damit wird auch die in der Einstellvorrichtung vorgesehene Feder vermieden! Es wurde beobachtet, dass die unterschiedlichen Kennlinien der Federn im Stand der Technik es nicht gestatten Druckregelventile zu realisieren, die in einem großen Intervall der Eingangsdrucke eine ausreichend reproduzierbare Kennlinie zur Verfügung stellen. Dabei ist das Problem gemeint, dass die Strom-Druck-Kennlinie bei einem ersten niedrigen Eingangsdruck anwendungsgemäß gleich (bzw. innerhalb der vorgegebenen Toleranzen) sein sollte einer Strom-Druck-Kennlinie bei einem zweiten (deutlich) höheren Eingangsdruck. Diese Anforderung wird mit dem erfindungsgemäßen Vorschlag erreicht.

Hierbei sind Druckintervalle von beispielsweise 1 bar bis 40 bar, bevorzugt in einem Druckbereich von 2 bar bis 25 bar gemeint.

Die Anlagefläche kann insbesondere an dem Magnetkern ausgebildet sein.

Gemäß einer bevorzugten Ausführung ist vorgesehen, dass der Magnetkern einstückig ausgebildet ist. Es kann auch vorgesehen sein, dass der Magnetkern aus einem einzigen Rohling gearbeitet ist. Dadurch können mittels der Herstellung oder Bearbeitung des Magnetkerns genaue Endlagen für die relativ zum Magnetkern beweglichen Komponenten, insbesondere den Anker und den Steuerkolben, vorgegeben werden. Es wurde im Rahmen der Erfindung erkannt, dass eine ausreichend genaue Bearbeitung möglich ist, was ein gängiges Vorurteil bei der Herstellung von Ventilen überwunden hat. Beispielsweise kann die vollständige Bearbeitung des Magnetkerns in einer Aufspannung erfolgen. Auf zusätzliche Komponenten wie Federn oder Distanzstücke, mittels welchen bei aus dem Stand der Technik bekannten Ventilen Fertigungstoleranzen ausgeglichen wurden, kann vorteilhaft verzichtet werden. Dies vereinfacht die Herstellung und spart Komponenten.

Gemäß einer bevorzugten Ausführung ist vorgesehen, dass die Anlagefläche unmittelbar am Magnetkern ausgebildet ist. Auf Komponenten wie Distanzstücke oder Federn kann somit vorteilhaft verzichtet werden.

Gemäß einer bevorzugten Ausführung ist vorgesehen, dass zwischen Steuerkolben und Anlagefläche keine Feder und/oder kein Distanzstück angeordnet ist. Gemäß einer weiteren bevorzugten Ausführung ist vorgesehen, dass zwischen Schieberhülse und Anlagefläche keine Feder und/oder kein Distanzstück angeordnet ist. Steuerkolben und/oder Schieberhülse liegen somit typischerweise unmittelbar an der Anlagefläche an, was die bereits weiter oben genannten Vorteile mit sich bringt.

Gemäß einer bevorzugten Ausführung ist der Ankerraumboden unmittelbar am Magnetkern ausgebildet. Dies ist insbesondere deshalb vorteilhaft, weil auf Distanzstücke oder ähnliche Komponenten verzichtet werden kann. Die genaue Position des Ankerraumbodens und damit einer Begrenzung der Bewegung des Ankers wird vorteilhaft beim Bearbeitungsvorgang des Magnetkerns festgelegt.

Gemäß einer bevorzugten Ausführung ist zwischen Ankerraumboden und Anker keine Feder und/oder kein Distanzstück angeordnet. Auf diese Komponenten kann bei einer entsprechend genauen Bearbeitung vorteilhaft verzichtet werden.

Es sei verstanden, dass unter einem Distanzstück insbesondere eine Komponente verstanden sei, welche einen Abstand zwischen einer Fläche des Magnetkerns und einer anderen Komponente, insbesondere einem Anker, einer Schieberhülse oder einem Steuerkolben, vergrößert. Durch das Vorsehen derartiger Distanzstücke wird bei Ausführungen gemäß dem Stand der Technik typischerweise ein Ausgleich von Fertigungstoleranzen vorgenommen.

Des Weiteren ist in dem Vorschlag vorteilhafter Weise vorgesehen, dass der Anker gebildet ist von einem Ankerzylinder und einem Ankerkörper, wobei der Ankerzylinder einen größeren Durchmesser aufweist, als der Ankerkörper und der Ankerkörper in der ersten Stellung an den Ankerraumboden anliegt.

Der Anker kann sehr variabel ausgebildet sein. Zunächst ist es möglich, dass der Anker nur aus einem geometrischen Grundkörper, zum Beispiel einem Zylinder besteht, der in dem Ankerraum geführt ist. Es ist auch möglich, den Anker aus zwei verschiedenen Grundkörpern, einem Ankerzylinder und einem Ankerkörper aufzubauen und das Element mit dem kleineren Durchmesser, dem Ankerkörper für die Lagerung des Ankers einzusetzen.

Bei einer bevorzugten Ausgestaltung des Vorschlags ist vorgesehen, dass die Ankerstange einstückig mit dem Anker ausgebildet ist oder die Ankerstange fliegend zum Anker angeordnet ist. Alternativ ist vorgesehen, dass die Ankerstange einstückig mit dem Steuerkolben ausgebildet ist oder die Ankerstange fliegend zum Steuerkolben angeordnet ist. Die Ausgestaltung von Anker, Ankerstange und Steuerkolben zueinander ist gemäß dem Vorschlag sehr flexibel. Die Teile können jeweils einzeln, also fliegend zueinander ausgeführt sein. Die Teile werden dann aufgrund ihrer gegenseitigen Berührung bewegt, gegebenfalls sorgt die Rückstellfeder für ein Anliegen der einzelnen Elemente. Es ist aber auch möglich, ein aus Anker, Ankerstange und Steuerkolben bestehendes einstückiges Bauteil vorzusehen.

Des Weiteren ist vorgesehen, dass der Magnetkern topfartig ausgebildet ist und der Ankerraumboden den Boden dieses Topfes bildet, an dem sich eine Ankerraumwand anschließt und die Ankerraumwand an dem Ankerraumboden abgewandten Ende einen Steuerkonus trägt, der mit dem Anker, insbesondere dem Ankerkörper, zusammenwirkt. Der Magnetkern hat auch die Aufgabe den magnetischen Fluss zu leiten. Durch das Zusammenwirken des Ankers mit dem Steuerkonus wird das gewünschte Regelverhalten realisiert. Für den Steuerkonus ist daher bereits eine entsprechende exakte Bearbeitung vorgesehen, auch der Ankerraumboden ist genau zu positionieren, was geschickter Weise in einem Bearbeitungsschritt bzw. einer Bearbeitungsfolge bei unveränderter Aufspannung des Magnetkerns erfolgt.

Geschickter Weise ist vorgesehen, dass das Gehäuse eine Fixierungsvertiefung für die Schieberhülse aufweist, wobei die Anlagefläche in der Fixierungsvertiefung angeordnet ist. Sowohl die Fixierungsvertiefung, wie auch die Anlagefläche sind auf der, dem Ankerraum abgewandten Seite des Magnetkerns vorgesehen. Die Fixierungsvertiefung bietet eine Führung für die Schiebehülse. Auch diese Herstellung/Bearbeitung erfolgt geschickter Weise in einem Bearbeitungsschritt bzw. einer Bearbeitungsfolge bei unveränderter Aufspannung des Magnetkerns.

In einer vorteilhaften Ausgestaltung ist vorgesehen, dass sich in der zweiten Stellung des Elektromagneten der Ankerzylinder am Beginn des Steuerkonus befindet.

In einer weiteren bevorzugten Ausführungsform ist vorgesehen, dass der Ankerraumboden und die Anlagefläche zueinander parallel orientiert sind.

Des Weiteren ist es günstig, dass der Ankerraumboden und/oder die Anlagefläche je als Konus ausgebildet sind.

Es werden verschiedene Alternativen vorgeschlagen, um den Magnetkern auszugestalten und so eine exakte gegenseitige Positionierung des Ankerraumbodens einerseits und der Anlagefläche andererseits zur Verfügung zu stellen. Die konusartige Ausgestaltung, insbesondere des Ankerraumbodens, erlaubt es gegebenenfalls auch noch, zusätzliche magnetische Eigenschaften zu nutzen. Der Konus erlaubt aber auch eine radiale Führung des jeweiligen Elementes. Dabei ist es möglich, sowohl einen Innenwie auch einen Außenkonus vorzusehen. Natürlich ist es auch möglich, Mischformen der vorgeschlagenen Varianten, also plane Fläche einerseits (als Ankerraumboden oder Anlagefläche) und Konus einerseits (als Anlagefläche oder Ankerraumboden) andererseits miteinander zu kombinieren.

Des Weiteren umfasst die Erfindung auch die Verwendung eines Ventils, wie beschrieben, in einem eingangsseitigen Druckbereich von 1 bar bis 40 bar, bevorzugt in einem eingangsseitigen Druckbereich von 1,5 bar bis 35 bar, insbesondere bevorzugt in einem eingangsseitigen Druckbereich von 2 bar bis 25 bar.

Gerade die Fähigkeit des vorgeschlagenen Ventils ein Druckintervall abzudecken, bei welchen sich der niedrigste und der höchste Druck um den Faktor 10 unterscheiden und dabei die hohe Wiederholungsgüte der Strom-Druck-Kennlinie bei unterschiedlichen Drücken einhält, macht den Wert dieses Vorschlages aus. Überraschenderweise wird dieses Ergebnis mit weniger Bauteilen erreicht, da eine Einstellvorrichtung die Lage des Ankers relativ zum Ankerraumboden nicht benötigt wird. Der Vorschlag ist daher auch günstiger herzustellen, da die erhöhten Kosten bei der Herstellung von den Einsparungen der nicht benötigten Einstellvorrichtung überkompensiert wird.

Für den Parameter Druck wird ein Intervall angegeben, das durch eine obere und untere Grenze beschrieben ist. Als Obergrenze sind zum Beispiel dabei folgende Werte vorgesehen: 50 bar, 45 bar, 40 bar, 35 bar, 30 bar, 25 bar, 20 bar und 15 bar. Als Untergrenze gelten zum Beispiel folgende Werte: 0,5 bar, 1 bar, 1,5 bar, 2 bar, 2,5 bar, 3 bar, 4 bar, 5 bar, 7 bar, 9 bar. Die Offenbarung dieser Anmeldung umfasst die Menge von allen Intervallen, die durch alle möglichen, technisch richtigen Kombinationen der vorgenannten Ober- und Untergrenzen besteht.

In diesem Zusammenhang wird insbesondere darauf hingewiesen, dass alle im Bezug auf das Ventil beschriebenen Merkmale und Eigenschaften aber auch Verfahrensweisen sinngemäß auch bezüglich der Formulierung der erfindungsgemäßen Verwendung übertragbar und im Sinne der Erfindung einsetzbar und als mitoffenbart gelten. Gleiches gilt auch in umgekehrter Richtung, das bedeutet, nur im Bezug auf die Verwendung genannte, bauliche also vorrichtungsgemäße Merkmale können auch im Rahmen der Vorrichtungsansprüche für das Ventil berücksichtigt und beansprucht werden und zählen ebenfalls zur Offenbarung.

In der Zeichnung ist die Erfindung insbesondere in einem Ausführungsbeispiel schematisch dargestellt. Es zeigen:
- Fig. 1: im Schnitt ein erfindungsgemäßes Ventil in einer zweiten Stellung seines Elektromagneten
- Fig. 2: im Schnitt ein erfindungsgemäßes Ventil in einer zweiten Stellung seines Elektromagneten

In den Figuren sind gleiche oder einander entsprechende Elemente jeweils mit den gleichen Bezugszeichen bezeichnet und werden daher, sofern nicht zweckmäßig, nicht erneut beschrieben. Die in der gesamten Beschreibung enthaltenen Offenbarungen sind sinngemäß auf gleiche Teile mit gleichen Bezugszeichen bzw. gleichen Bauteilbezeichnungen übertragbar. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen. Weiterhin können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

Das Ventil 100 ist in den beiden Figuren in zwei verschiedenen Stellungen gezeigt.

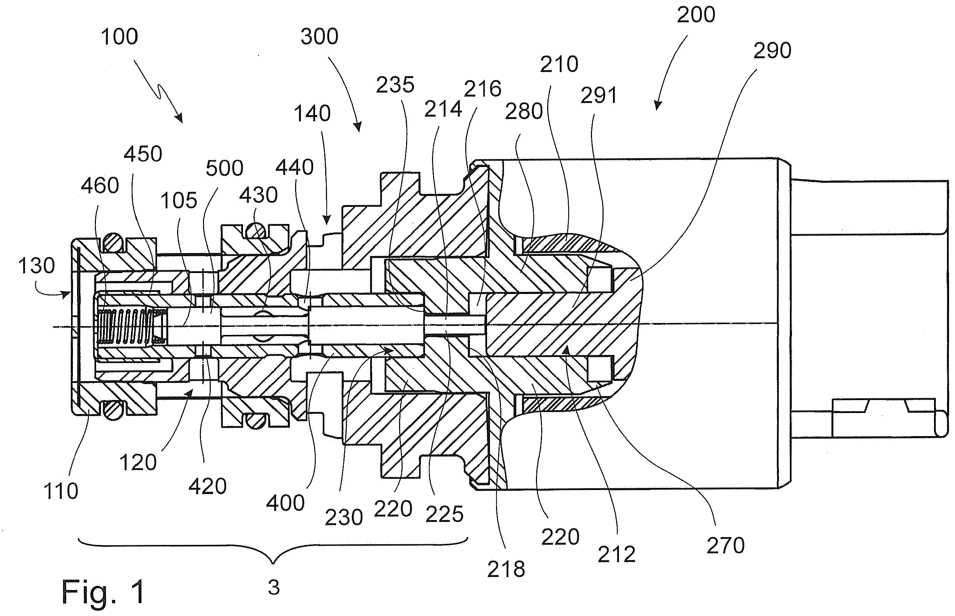

Fig.1 zeigt den stromlosen Zustand (Stellung) des Elektromagneten, bei welchem der Anker 212 durch die entspannte Rückstellfeder 460 ganz nach rechts verschoben ist, und in dieser zweiten Stellung liegt der Steuerkolben 500 an der Anlagefläche 235 an, wie auch die Schieberhülse 400. In Fig. 1 verschließt der Steuerkolben 500 die Druckanschlussöffnung 420, das Ventil ist gesperrt.

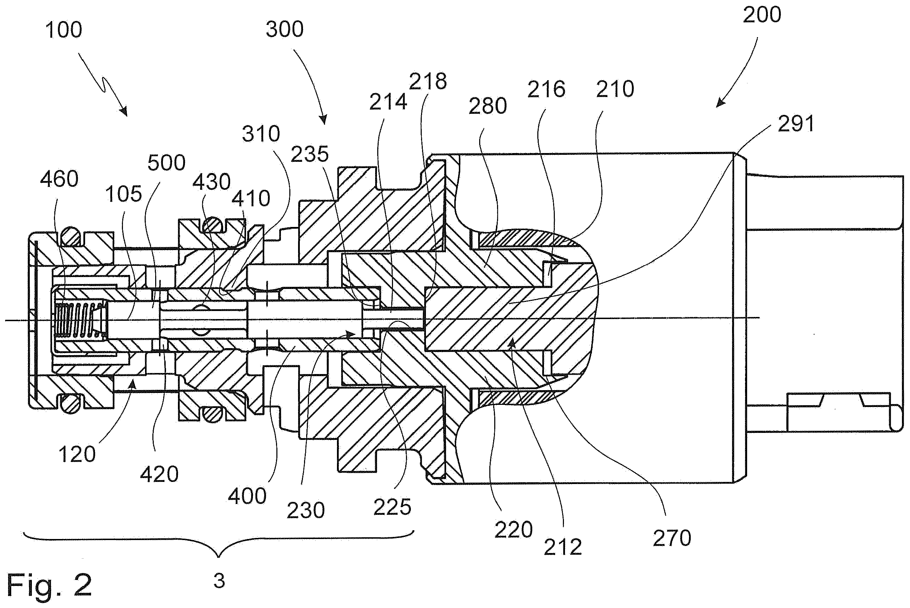

Fig.2 zeigt den bestromten Zustand (Stellung) des Elektromagneten, bei welchem der Anker 212 durch die von der Spule erzeugten Magnetkraft gegen die Rückstellfeder 460 nach links verschoben ist und in der ersten Stellung des Elektromagneten der Anker 212 an dem Ankerraumboden 218 (als Hubbegrenzung) anliegt. In Fig. 2 gibt der Steuerkolben 500 die Druckanschlussöffnung 420 frei, das Ventil ist geöffnet.

Das Ventil 100 erstreckt sich entlang einer Längsachse 105. Das Ventil 100 ist um die Längsachse 105 im Wesentlichen rotationssymmetrisch ausgebildet, wobei es Abweichungen von der Rotationssymmetrie gibt, beispielsweise bei Anschlüssen.

Das Ventil 100 weist ein Gehäuse 200 auf, welches in Figur 1 von außen dargestellt ist.

In dem Gehäuse 200 befindet sich ein Elektromagnet 210. Dieser ist in den Figuren nur partiell zu sehen, da er weitgehend vom Gehäuse 200 überdeckt wird.

Der Elektromagnet 210 weist einen Anker 212 auf. An diesem ist eine Ankerstange 214 angebracht. Der Anker 212 ist in einem Ankerraum 216 entlang der Längsachse 105 linear beweglich.

Zum Antreiben des Ankers 212 weist der Elektromagnet 210 eine Spule auf, welche in den Figuren vom Gehäuse 200 überdeckt wird und deshalb nicht zu sehen ist.

Der Elektromagnet 210 weist ferner einen Magnetkern 220 auf. Dieser ragt wie gezeigt etwas aus dem Gehäuse 200 heraus und verschließt das topfartige Gehäuse 200 in Richtung des Ventilgehäuses 300.

In dem Magnetkern 220 ist, dem Ventilteil 3 zugewandt, eine Fixierungsvertiefung 230 ausgebildet. Auf deren Funktion wird weiter unten eingegangen werden. In der Fixierungsvertiefung 230 ist eine Anlagefläche 235 ausgebildet, welche einen Boden der Fixierungsvertiefung 230 bildet. Der Magnetkern bildet auf der dem Ventilteil 3 abgewandten Seite (im Elektromagneten 210, bzw. Gehäuse 200) eine topfartige Struktur aus, die den Ankerraum 216 zumindest teilweise begrenzt. Diese topfartige Struktur besitzt den Ankerraumboden 218 an dem sich rechtwinklig, in Richtung der Längsachse 105 die zylindrische Ankerraumwand 280 anschließt. Diese Ankerraumwand 280 hat an ihrem, dem Ankerraumboden 218 abgewandten Ende einen radial nach außen gerichteten Absatz, an dem eine als Außenkonus gebildeter Steuerkonus 270 anschließt. In Fig. 1 ist gezeigt, dass in dieser Stellung der Ankerzylinder 290 an der Spitze oder Ende des Steuerkonus 270 positioniert ist. Der Ankerraumboden 218 definiert die linksseitige Endlage des Ankers 212, wobei der Anker 212 dabei unmittelbar an dem Ankerraumboden 218 anliegt. Es befinden sich keine weiteren Komponenten wie Federn oder Distanzstücke zwischen dem Ankerraumboden 218 und dem Anker 212.

In dem Magnetkern 220 ist des Weiteren eine Durchdringungsbohrung 225 ausgebildet, welche den Ankerraum 216 mit der Fixierungsvertiefung 230 verbindet. Die Ankerstange 214 erstreckt sich von dem Anker 212 durch die Durchdringungsbohrung 225.

Die Durchdringungsbohrung 225 verbindet dabei die Anlagefläche 235 mit der Ankerboden 218. Es ist gut zu sehen, dass günstiger Weise die Anlagefläche 235 und der Ankerboden 218 gleichzeitig bzw. in der gleichen Aufspannung hergestellt werden, um hier einen sehr hohe Genauigkeit zu erreichen. Auf dieser sehr genau geschaffenen Anlagefläche 235 stützt sich neben dem Steuerkolben 500 (in der zweiten Stellung - siehe Hauptanspruch - bzw. nach Fig. 1) auch die Schieberhülse 400 ab, wodurch sich die beiden Elemente, die zur Realisierung der Ventilfunktion zusammenzuwirken haben, auf die gleiche Fläche, die Anlagefläche 235 beziehen, und so Fertigungstoleranzen minimiert sind.

Das Gehäuse 200 ist vorliegend aus Metall ausgebildet.

Das Ventil 100 weist ferner ein Ventilgehäuse 300 auf. Dieses ist vorliegend aus Kunststoff ausgebildet. Bevorzugt wird das Ventilgehäuse 300 als Kunststoffspritzgussteil hergestellt.

Außerdem weist das Ventil 100 eine Schieberhülse 400 auf. Diese ist vorliegend aus Metall ausgebildet.

Das Ventilgehäuse 300 umschließt die Schieberhülse 400. Die Schieberhülse 400 ist dabei so ausgerichtet, dass sie sich entlang der Längsachse 105 erstreckt.

Die Schieberhülse 400 ist in der bereits erwähnten Fixierungsvertiefung 230 aufgenommen und wird durch diese in Richtungen quer zur Längsachse 105 stabilisiert. Die Schieberhülse 400 liegt dabei an der Anlagefläche 235 an und wird durch die Anlagefläche 235 an einer Bewegung nach rechts gehindert.

In der Schieberhülse 400 ist außenseitig eine umfangsmäßig umlaufende Nut 410 ausgebildet. Komplementär dazu ist an dem Ventilgehäuse 300 ein Wulst 310 ausgebildet, welcher in die Nut 410 eingreift. Damit sind die Schieberhülse 400 und das Ventilgehäuse 300 formschlüssig miteinander verbunden. Insbesondere kann die Schieberhülse 400 relativ zum Ventilgehäuse 300 nicht mehr entlang der Längsachse 105 verschoben werden. Dies gilt in beide Richtungen entlang der Längsachse 105, insbesondere jedoch in Richtung auf das Gehäuse 200 zu. Es kann auch davon gesprochen werden, dass das Ventilgehäuse 300 gegen Verschiebung an der Schieberhülse 400 gesperrt ist.

Das Ventil 100 weist einen Druckanschluss 120, einen Arbeitsanschluss 130 und einen Tankanschluss 140 auf.

Der Druckanschluss 120 ist radial seitlich am Ventil 100 ausgebildet. Er dient zum Zuführen eines unter Druck stehenden Fluids, welches mittels des Ventils 100 gesteuert werden soll. Bei dem Fluid kann es sich beispielsweise um ein Gas oder um eine Flüssigkeit handeln.

Der Arbeitsanschluss 130 ist stirnseitig ausgebildet. Er wird seitlich begrenzt von einem Filterkorb 110, welcher auf dem Ventilgehäuse 300 aufsitzt. Der Filterkorb 110 trägt einen Filter, mittels dessen aus dem Arbeitsanschluss 130 austretendes Fluid gefiltert werden kann. Auch für den Druckanschluss 120 ist ein Filter vorgesehen.

Das aus dem Arbeitsanschluss 130 austretende Fluid kann beispielsweise für diverse Steuerungs- oder Antriebszwecke verwendet werden, beispielsweise in einem Automatikgetriebe eines Kraftfahrzeugs.

Der Tankanschluss 140 ist wiederum radial seitlich am Ventil 100 ausgebildet. An ihn kann insbesondere eine zu einem Tank führende Leitung angeschlossen werden, so dass Fluid zum Tank zurückgeführt werden kann.

Der Arbeitsanschluss 130 ist mit einer Arbeitsanschlussöffnung 430 in der Schieberhülse 40 verbunden. Die Arbeitsanschlussöffnung 430 ist dabei teilweise von dem Steuerkolben 500 verdeckt. Die Verbindung von Arbeitsanschlussöffnung 430 und Arbeitsanschluss verläuft, bezogen auf die Längsachse 105, in axialer Richtung und ist relativ zu der Ansicht nach Fig. 1/ Fig.2 um 90° gedreht.

In der Schieberhülse 400 ist des Weiteren eine Druckanschlussöffnung 420 ausgebildet. Diese Druckanschlussöffnung 420 ist mit dem Druckanschluss 120 verbunden und sorgt dafür, dass das Fluid vom Druckanschluss 120 in das Innere der Schieberhülse 400 gelangt.

In der Schieberhülse 400 ist überdies eine Tankanschlussöffnung 440 ausgebildet, welche mit dem Tankanschluss 140 verbunden ist. Die Tankanschlussöffnung 440 sorgt dafür, dass Fluid aus dem Inneren der Schieberhülse 400 in den Tankanschluss 140 gelangt.

In der Schieberhülse 400 befindet sich die Arbeitsanschlussöffnung 430 zwischen der Tankanschlussöffnung 440 und der Druckanschlussöffnung 420.

Die Schieberhülse 400 liegt unmittelbar an der Anlagefläche 235 an. Ihre Lage wird somit durch die Bearbeitung des Magnetkerns 220 definiert. Es befinden sich keine Distanzstücke, Federn oder andere Komponenten zwischen der Schieberhülse 400 und der Anlagefläche 235.

Im Inneren der Schieberhülse 400 befindet sich ein Steuerkolben 500. Dieser ist wie gezeigt strukturiert ausgebildet, so dass er selektiv die Anschlüsse 120, 130, 140 miteinander verbinden kann.

Es besitzt im mittleren Bereich eine Verjüngung zur Bildung eines Durchflusskanals. Begrenzt wird der Durchflusskanal von Steuerkanten des Steuerkolbens 500.

In der in Figur 1 gezeigten Stellung ist der Arbeitsanschluss 130 mit dem Tankanschluss 140 verbunden, während der Druckanschluss 120 gesperrt ist. Der Steuerkolben 500 liegt dabei unmittelbar an der Anlagefläche 235 an, ohne dass sich dazwischen Komponenten wie eine Feder oder ein Distanzstück befinden würden. Wird der Steuerkolben 500 mittels des Elektromagneten 210 nach links bewegt, so wird der Arbeitsanschluss 130 mit dem Druckanschluss 120 verbunden, während der Tankanschluss 140 gesperrt wird. Dies entspricht einer üblichen Funktionalität eines Ventils. Es handelt sich aufgrund der beschriebenen Ausführung somit vorliegend um ein Schieberventil. Es sei jedoch darauf hingewiesen, dass die erfindungsgemäße Ausführung nicht nur bei Schieberventilen, sondern bei allen Arten von Ventilen angewendet werden kann. Die Beschreibung im Kontext eines Schieberventils wird hier nur beispielhaft gegeben.

Am linken Ende der Schieberhülse 400 ist eine Abstützkappe 450 aufgebracht. Diese verschließt die Schieberhülse 400.

Zwischen der Abstützkappe 450 und dem Steuerkolben 500 ist eine Rückstellfeder 460 angeordnet. Diese stützt sich an der Abstützkappe 450 ab und drückt den Steuerkolben 500 nach rechts. Ohne Kraftbeaufschlagung durch den Elektromagneten 210 verbliebt somit der Steuerkolben 500 in der in Figur 1 dargestellten Position. Wird hingegen die bereits erwähnte Spule des Elektromagneten 210 mit Strom beaufschlagt, so wird der Anker 212 nach links bewegt. Über die Ankerstange 214 wird diese Bewegung auf den Steuerkolben 500 übertragen, welcher ebenfalls gegen die Kraft der Rückstellfeder 460 nach links bewegt wird. Dadurch kann das Ventil 100 in üblicher Weise betätigt werden.

Die jetzt mit der Anmeldung und später eingereichten Ansprüche sind ohne Präjudiz für die Erzielung weitergehenden Schutzes.

Sollte sich hier bei näherer Prüfung, insbesondere auch des einschlägigen Standes der Technik, ergeben, dass das eine oder andere Merkmal für das Ziel der Erfindung zwar günstig, nicht aber entscheidend wichtig ist, so wird selbstverständlich schon jetzt eine Formulierung angestrebt, die ein solches Merkmal, insbesondere im Hauptanspruch, nicht mehr aufweist. Auch eine solche Unterkombination ist von der Offenbarung dieser Anmeldung abgedeckt.

Es ist weiter zu beachten, dass die in den verschiedenen Ausführungsformen beschriebenen und in den Figuren gezeigten Ausgestaltungen und Varianten der Erfindung beliebig untereinander kombinierbar sind. Dabei sind einzelne oder mehrere Merkmale beliebig gegeneinander austauschbar. Diese Merkmalskombinationen sind ebenso mit offenbart.

Die in den abhängigen Ansprüchen angeführten Rückbeziehungen weisen auf die weitere Ausbildung des Gegenstandes des Hauptanspruches durch die Merkmale des jeweiligen Unteranspruches hin. Jedoch sind diese nicht als ein Verzicht auf die Erzielung eines selbständigen, gegenständlichen Schutzes für die Merkmale der rückbezogenen Unteransprüche zu verstehen.

Merkmale, die nur in der Beschreibung offenbart wurden oder auch Einzelmerkmale aus Ansprüchen, die eine Mehrzahl von Merkmalen umfassen, können jederzeit als von erfindungswesentlicher Bedeutung zur Abgrenzung vom Stande der Technik in den oder die unabhängigen Anspruch/Ansprüche übernommen werden, und zwar auch dann, wenn solche Merkmale im Zusammenhang mit anderen Merkmalen erwähnt wurden beziehungsweise im Zusammenhang mit anderen Merkmalen besonders günstige Ergebnisse erreichen.

## Patentansprüche

1. Ventil, insbesondere Schieberventil, aufweisend
- ein Gehäuse (200), welches einen Elektromagneten (210) aufnimmt und
- ein Ventilgehäuse (300), welches ein Ventilteil (3) aufnimmt und
- das Gehäuse (200), dem Ventilgehäuse (300) zugewandt, einen Magnetkern (220) aufweist und
- der Magnetkern (220) im Elektromagneten (210) einen Ankerraumboden (218) ausbildet, der den Ankerraum (216) begrenzt und an dem der im Ankerraum (216) beweglich gelagerte Anker (212) in einer ersten Stellung des Elektromagneten (210) anliegt und
- der Magnetkern (220) im Bereich des Ankerraumbodens (218) eine Durchdringungsbohrung (225) aufweist, welche eine mit dem Anker (212) in Wirkverbindung stehende Ankerstange (214) aufnimmt und
- das Ventilgehäuse (300) eine Schieberhülse (400) aufnimmt, welche sich entlang einer Längsachse (105) erstreckt, wobei
- das Gehäuse (200) zumindest eine Anlagefläche (235) aufweist, an welcher die Schieberhülse (400) anliegt, und die Durchdringungsbohrung (225) in die Anlagefläche (235) mündet und in der Schieberhülse (400) ein gegen die Kraft einer Rückstellfeder (460) beweglicher Steuerkolben (500) angeordnet ist, der mit der Ankerstange (214) in Wirkverbindung steht und in einer zweiten Stellung des Elektromagneten (210) an der Anlagefläche (235) anliegt,
**dadurch gekennzeichnet, dass** in der Schieberhülse (400) außenseitig eine umfangsmäßig umlaufende Nut (410) ausgebildet ist, und dass komplementär dazu an dem Ventilgehäuse (300) ein Wulst (310) ausgebildet ist, welcher in die Nut (410) eingreift, sodass die Schieberhülse (400) und das Ventilgehäuse (300) formschlüssig miteinander verbunden sind.

2. Ventil nach Anspruch 1, **dadurch gekennzeichnet, dass** der Magnetkern (220) einstückig ausgebildet ist und/oder aus einem einzigen Rohling gearbeitet ist.

3. Ventil nach einem der vorhergehenden Ansprüche, **dadurch gekennzeichnet, dass** die Anlagefläche (235) unmittelbar am Magnetkern (220) ausgebildet ist.

4. Ventil nach einem der vorhergehenden Ansprüche, **dadurch gekennzeichnet, dass** zwischen Steuerkolben (500) und Anlagefläche (235), und/oder zwischen Schieberhülse (400) und Anlagefläche (235), keine Feder und/oder kein Distanzstück angeordnet ist.

5. Ventil nach einem der vorhergehenden Ansprüche, **dadurch gekennzeichnet, dass** der Ankerraumboden (218) unmittelbar am Magnetkern (220) ausgebildet ist.

6. Ventil nach einem der vorhergehenden Ansprüche, **dadurch gekennzeichnet, dass** zwischen Ankerraumboden (218) und Anker (212) keine Feder und/oder kein Distanzstück angeordnet ist.

7. Ventil nach einem der vorhergehenden Ansprüche, **dadurch gekennzeichnet, dass** keine Einstellvorrichtung für die Lage des Ankers (212) relativ zum Ankerraumboden (218) in der zweiten Stellung des Elektromagneten (210) vorgesehen ist.

8. Ventil nach einem der vorhergehenden Ansprüche, **dadurch gekennzeichnet, dass** der Anker (212) gebildet ist von einem Ankerzylinder (290) und einem Ankerkörper (291), wobei der Ankerzylinder (290) einen größeren Durchmesser aufweist als der Ankerkörper (291) und der Ankerkörper (291) in der ersten Stellung an dem Ankerraumboden (218) anliegt.

9. Ventil nach einem der vorhergehenden Ansprüche, **dadurch gekennzeichnet, dass** die Ankerstange (214) einstückig mit dem Anker (212) ausgebildet ist oder die Ankerstange (214) fliegend zum Anker (212) angeordnet ist.

10. Ventil nach einem der vorhergehenden Ansprüche, **dadurch gekennzeichnet, dass** die Ankerstange (214) einstückig mit dem Steuerkolben (500) ausgebildet ist oder die Ankerstange (214) fliegend zum Steuerkolben (500) angeordnet ist.

11. Ventil nach einem der vorhergehenden Ansprüche, **dadurch gekennzeichnet, dass** der Magnetkern (220) topfartig ausgebildet ist und der Ankerraumboden (218) den Boden dieses Topfes bildet, an dem sich eine Ankerraumwand (280) anschließt und die Ankerraumwand (280) am dem Ankerraumboden (218) abgewandten Ende einen Steuerkonus (270) trägt, der mit dem Anker (212), insbesondere dem Ankerkörper (291), zusammenwirkt.

12. Ventil nach Anspruch 11, **dadurch gekennzeichnet, dass** sich in der zweiten Stellung des Elektromagneten (210) der Ankerzylinder (290) am Beginn des Steuerkonus (270) befindet und/oder das Gehäuse (200) eine Fixierungsvertiefung (230) für die Schieberhülse (400) aufweist, wobei die Anlagefläche (235) in der Fixierungsvertiefung (230) angeordnet ist.

13. Ventil nach einem der vorhergehenden Ansprüche, **dadurch gekennzeichnet, dass** der Ankerraumboden (218) und die Anlagefläche (235) zueinander parallel orientiert sind.

14. Ventil nach einem der vorhergehenden Ansprüche, **dadurch gekennzeichnet, dass** der Ankerraumboden (218) und/oder die Anlagefläche (235) je als Konus ausgebildet sind.

15. Verwendung eines Ventils nach einem der vorhergehenden Ansprüche in einem eingangsseitigen Druckbereich von 1 bar bis 40 bar, bevorzugt in einem eingangsseitigen Druckbereich von 1,5 bar bis 35 bar, insbesondere bevorzugt in einem eingangsseitigen Druckbereich von 2 bar bis 25 bar.

## Claims

1. Valve, in particular spool valve, having
- a housing (200) which receives an electromagnet (210) and
- a valve housing (300) which receives a valve part (3) and
- the housing (200), facing the valve housing (300), has a magnetic core (220) and
- the magnetic core (220) in the electromagnet (210) forms an armature space floor (218) which delimits the armature space (216) and against which the armature (212) movably mounted in the armature space (216) rests in a first position of the electromagnet (210) and
- the magnetic core (220) in the region of the armature space floor (218) has a penetration bore (225) which receives an armature rod (214) which is operatively connected to the armature (212) and
- the valve housing (300) receives a sliding sleeve (400) which extends along a longitudinal axis (105), wherein
- the housing (200) has at least one contact surface (235) against which the sliding sleeve (400) rests, and the penetration bore (225) opens into the contact surface (235) and in the sliding sleeve (400) a control piston (500) movable against the force of a return spring (460) is arranged, which is operatively connected to the armature rod (214) and bears against the contact surface (235) in a second position of the electromagnet (210),
**characterised in that**
a circumferential groove (410) is formed on the outside in the sliding sleeve (400), and **in that** complementarily thereto a bead (310) is formed on the valve housing (300), which engages in the groove (410), so that the sliding sleeve (400) and the valve housing (300) are positively connected to one another.

2. Valve according to claim 1, **characterised in that** the magnetic core (220) is formed in one piece and/or is made from a single blank.

3. Valve according to any one of the preceding claims, **characterised in that** the contact surface (235) is formed directly on the magnetic core (220).

4. Valve according to any one of the preceding claims, **characterised in that** no spring and/or no spacer is arranged between the control piston (500) and the contact surface (235) and/or between the sliding sleeve (400) and the contact surface (235).

5. Valve according to any one of the preceding claims, **characterised in that** the armature space floor (218) is formed directly on the magnetic core (220).

6. Valve according to any one of the preceding claims, **characterised in that** no spring and/or no spacer is arranged between the armature space floor (218) and the armature (212).

7. Valve according to any one of the preceding claims, **characterised in that** no adjustment device is provided for the position of the armature (212) relative to the armature space floor (218) in the second position of the electromagnet (210).

8. Valve according to any one of the preceding claims, **characterised in that** the armature (212) is formed by an armature cylinder (290) and an armature body (291), wherein the armature cylinder (290) has a larger diameter than the armature body (291) and the armature body (291) bears in the first position on the armature space floor (218).

9. Valve according to any one of the preceding claims, **characterised in that** the armature rod (214) is formed in one piece with the armature (212) or the armature rod (214) is arranged cantilevered to the armature (212).

10. Valve according to any one of the preceding claims, **characterised in that** the armature rod (214) is formed in one piece with the control piston (500) or the armature rod (214) is arranged cantilevered to the control piston (500).

11. Valve according to any one of the preceding claims, **characterised in that** the magnetic core (220) is pot-shaped and the armature chamber floor (218) forms the bottom of this pot, to which an armature chamber wall (280) connects and the armature chamber wall (280) carries a control cone (270) on the end facing away from the armature space floor (218), which interacts with the armature (212), in particular the armature body (291).

12. Valve according to claim 11, **characterised in that** in the second position of the electromagnet (210) the armature cylinder (290) is at the start of the control cone (270) and/or the housing (200) has a fixing recess (230) for the sliding sleeve (400), wherein the contact surface (235) is arranged in the fixing recess (230).

13. Valve according to any one of the preceding claims, **characterised in that** the armature space floor (218) and the contact surface (235) are oriented parallel to one another.

14. Valve according to any one of the preceding claims, **characterised in that** the armature space floor (218) and/or the contact surface (235) are each designed as a cone.

15. Use of a valve according to any one of the preceding claims in an inlet pressure range from 1 bar to 40 bar, preferably in an inlet pressure range from 1.5 bar to 35 bar, particularly preferably in an inlet pressure range from 2 bar to 25 bar.

## Revendications

1. Soupape, en particulier distributeur à tiroir, présentant
- un carter (200), lequel loge un électroaimant (210) et
- un carter de soupape (300), lequel loge une partie de soupape (3) et
- le carter (200) présente un noyau magnétique (220), tourné vers le carter de soupape(300) et
- le noyau magnétique (220) réalise dans l'électroaimant (210) un fond de chambre d'armature (218), qui délimite la chambre d'armature (216) et contre lequel l'armature (212) montée mobile dans la chambre d'armature (216) s'applique dans une première position de l'électroaimant (210) et
- le noyau magnétique (220) présente dans la zone du fond de chambre d'armature (218) un trou de pénétration (225), lequel loge une tige d'armature (214) en liaison fonctionnelle avec l'armature (212) et
- le carter de soupape (300) loge un manchon coulissant (400), lequel s'étend le long d'un axe longitudinal (105), dans laquelle
- le carter (200) présente au moins une surface d'appui (235), contre laquelle le manchon coulissant (400) s'applique, et le trou de pénétration (225) débouche dans la surface d'appui (235) et un piston de commande (500) mobile à l'encontre de la force d'un ressort de rappel (460), qui est en liaison fonctionnelle avec la tige d'armature (214) et, dans une seconde position de l'électroaimant (210), s'applique contre la surface d'appui (235), est disposé dans le manchon coulissant (400),
**caractérisée en ce que**
une rainure (410) périphérique de manière circonférentielle est réalisée extérieurement dans le manchon coulissant (400), et que, de manière complémentaire à cela, un bourrelet (310), lequel s'insère dans la rainure (410), est réalisé sur le carter de soupape (300), de sorte que le manchon coulissant (400) et le carter de soupape (300) sont reliés l'un à l'autre par coopération de formes.

2. Soupape selon la revendication 1, **caractérisée en ce que** le noyau magnétique (220) est réalisé d'une seule pièce et/ou travaillé à partir d'une seule ébauche.

3. Soupape selon l'une quelconque des revendications précédentes, **caractérisée en ce que** la surface d'appui (235) est réalisée directement sur le noyau magnétique (220).

4. Soupape selon l'une quelconque des revendications précédentes, **caractérisée en ce qu'**aucun ressort et/ou aucune entretoise n'est disposé entre le piston de commande (500) et la surface d'appui (235), et/ou n'est disposé entre le manchon coulissant (400) et la surface d'appui (235).

5. Soupape selon l'une quelconque des revendications précédentes, **caractérisée en ce que** le fond de chambre d'armature (218) est réalisé directement sur le noyau magnétique (220).

6. Soupape selon l'une quelconque des revendications précédentes, **caractérisée en ce qu'**aucun ressort et/ou aucune entretoise n'est disposé entre le fond de chambre d'armature (218) et l'armature (212).

7. Soupape selon l'une quelconque des revendications précédentes, **caractérisée en ce qu'**aucun dispositif de réglage n'est prévu pour la position de l'armature (212) par rapport au fond de chambre d'armature (218) dans la seconde position de l'électroaimant (210).

8. Soupape selon l'une quelconque des revendications précédentes, **caractérisée en ce que** l'armature (212) est formée par un cylindre d'armature (290) et un corps d'armature (291), dans laquelle le cylindre d'armature (290) présente un diamètre supérieur au corps d'armature (291) et le corps d'armature (291), dans la première position, s'applique contre le fond de chambre d'armature (218).

9. Soupape selon l'une quelconque des revendications précédentes, **caractérisée en ce que** la tige d'armature (214) est réalisée d'une seule pièce avec l'armature (212) ou la tige d'armature (214) est disposée en porte-à-faux par rapport à l'armature (212).

10. Soupape selon l'une quelconque des revendications précédentes, **caractérisée en ce que** la tige d'armature (214) est réalisée d'une seule pièce avec le piston de commande (500) ou la tige d'armature (214) est disposée en porte-à-faux par rapport au piston de commande (500).

11. Soupape selon l'une quelconque des revendications précédentes, **caractérisée en ce que** le noyau magnétique (220) est réalisé en forme de pot et le fond de chambre d'armature (218) forme le fond de ce pot, auquel se raccorde une paroi de chambre d'armature (280), et la paroi de chambre d'armature (280) porte à l'extrémité opposée au fond de chambre d'armature (218) un cône de commande (270), qui coopère avec l'armature (212), en particulier le corps d'armature (291).

12. Soupape selon la revendication 11, **caractérisée en ce que,** dans la seconde position de l'électroaimant (210), le cylindre d'armature (290) se trouve au début du cône de commande (270) et/ou le carter (200) présente un évidement de fixation (230) pour le manchon coulissant (400), dans laquelle la surface d'appui (235) est disposée dans l'évidement de fixation (230).

13. Soupape selon l'une quelconque des revendications précédentes, **caractérisée en ce que** le fond de chambre d'armature (218) et la surface d'appui (235) sont orientés parallèlement l'un à l'autre.

14. Soupape selon l'une quelconque des revendications précédentes, **caractérisée en ce que** le fond de chambre d'armature (218) et/ou la surface d'appui (235) sont réalisés respectivement en tant que cône.

15. Utilisation d'une soupape selon l'une quelconque des revendications précédentes dans une plage de pressions côté entrée de 1 bar à 40 bar, de préférence dans une plage de pressions côté entrée de 1,5 bar à 35 bar, de manière particulièrement préférée dans une plage de pressions côté entrée de 2 bar à 25 bar.
